# FASCICULE DE BREVET EUROPEEN

(11) **EP 3 810 473 B1**
(45) Date de publication et mention de la délivrance du brevet: **13.09.2023**
(21) Numéro de dépôt: 19737841.7
(22) Date de dépôt: 05.06.2019
(51) Int. Cl.: B60W 30/18

(54) **PROCÉDÉ ET SYSTÈME DE GESTION D'UN CHANGEMENT DE VOIE D'UN VÉHICULE AUTONOME OU PARTIELLEMENT AUTONOME**
VERFAHREN UND SYSTEM ZUR VERWALTUNG EINES SPURWECHSELS EINES AUTONOMEN ODER TEILWEISE AUTONOMEN FAHRZEUGS
METHOD AND SYSTEM FOR MANAGING A LANE CHANGE OF AN AUTONOMOUS OR PARTIALLY AUTONOMOUS VEHICLE

(30) Priorité: 20.06.2018 FR 1855439
(43) Date de publication de la demande: 28.04.2021
(73) Titulaire: PSA Automobiles SA, 78300 Poissy (FR)
(72) Inventeur: VARNIER, Matthieu, 78320 LA VERRIERE (FR)
(86) Numéro de dépôt international: PCT/FR2019/051328
(87) Numéro de publication internationale: WO 2019/243695

(56) Documents cités:
- EP-A1- 3 330 945
- EP-A2- 2 042 399
- FR-A1- 3 049 560
- US-A1- 2017 270 799
- US-B1- 9 475 491

## Description

L'invention se rapporte au domaine des systèmes d'aide à la conduite équipant les véhicules automobiles autonomes ou partiellement autonomes. Les systèmes d'aide à la conduite, souvent dénommés sous l'acronyme anglais ADAS (pour « *Advanced driver-assistance* systems »), ont pour but d'alléger la charge du conducteur, notamment en le libérant de certaines tâches, en améliorant son attention et/ou sa perception de l'environnement, en détectant certains risques, en effectuant automatiquement des actions en réponse à la détection de ces risques, etc.

Pour les véhicule autonomes ou partiellement autonomes, la conduite peut être entièrement déléguée au véhicule qui est équipé de capteurs lui permettant de percevoir l'environnement, et notamment les véhicules environnants. Cette perception de l'environnement par le véhicule permet de prévenir les risques d'accidents en garantissant le respect de règles prédéfinies, comme par exemple celle d'imposer que le véhicule se maintienne à une distance minimale du véhicule qui le précède.

La nécessité de changer de voie sur une route à plusieurs voies fait partie des situations qu'un véhicule autonome (ou partiellement autonome) doit pouvoir gérer sans l'intervention du conducteur présent dans l'habitacle. Or, on ne connait pas de procédé ou de système de gestion active d'un changement de file. Les véhicules connus fonctionnent sur la base de conditions autorisant ou non le changement de voie, ces conditions reposant sur l'absence de danger immédiat. Typiquement, l'autorisation du changement de voie requiert une zone libre suffisamment étendue pour ne pas nécessiter d'interaction entre véhicules, et plus particulièrement avec le véhicule amené à se trouver derrière le véhicule considéré une fois le changement de voie effectué.

On connait par le document EP3330945 un procédé et un dispositif de commande de déplacement. On connait par le document US9475491 un procédé et un dispositif de changement de voie pur un véhicule autonome.

Toutefois, il faut envisager que l'environnement puisse imposer un changement de voie, par exemple parce qu'il n'est plus possible de poursuivre dans la voie au-delà d'une certaine distance. Ce peut être le cas dans des situations diverses : si un obstacle se présente devant le véhicule, si la voie s'interrompt (fusion de deux voies via un biseau de raccordement, voie d'accélération sur une voie rapide, etc.)

Dans une situation nécessitant un changement de voie, un véhicule autonome doit être capable de gérer l'insertion dans la voie cible, qui est une voie adjacente à la voie courante, celle que le véhicule doit quitter. Ce changement de voie va généralement impliquer que le véhicule doive gérer l'insertion dans une file de véhicules, et donc l'insertion entre un véhicule avant et un véhicule arrière qui sont déjà présents sur la voie cible.

La présente invention a pour but de remédier aux inconvénients de l'état de la technique, et plus particulièrement ceux ci-dessus exposés, en proposant un procédé de gestion de changement de voie permettant à un véhicule de changer de voie de façon autonome dans des conditions non optimales.

À cet effet, l'invention concerne un procédé de gestion d'un changement de voie d'un véhicule équipé d'un système de conduite automatisé, le procédé comportant les étapes suivantes :
- déterminer si l'écart entre un premier véhicule, ou véhicule avant, circulant sur une voie adjacente, dite voie cible, et un deuxième véhicule, ou véhicule arrière, circulant sur la voie cible, est suffisant pour une insertion du véhicule hôte dans des conditions nominales ;
- si l'écart entre le véhicule avant et le véhicule arrière n'est pas suffisant pour une insertion du véhicule hôte dans des conditions nominales, et si le risque de collision avec le véhicule arrière est estimé comme significativement plus élevé que le risque de collision avec le véhicule avant, procéder au changement de voie du véhicule hôte vers la voie cible, en abaissant provisoirement la valeur de consigne de l'écart minimum de sécurité vis-à-vis du véhicule avant d'une valeur nominale à une valeur basse ;
- lorsque le véhicule hôte est sur la voie cible et inséré entre le véhicule avant et le véhicule arrière, augmenter progressivement la valeur de consigne de l'écart minimum de sécurité vis-à-vis du véhicule avant jusqu'à sa valeur nominale.

Ainsi le procédé conforme à l'invention permet de gérer un changement ne pouvant être opéré dans des conditions optimales, notamment lorsque la distance entre les véhicules entre lesquels le véhicule hôte doit s'insérer n'est pas suffisante. En abaissant provisoirement l'écart de sécurité minimal vis-à-vis du véhicule avant lorsque le risque de collision vis-à-vis du véhicule arrière apparait significativement plus élevé que le risque de collision avec le véhicule avant, le procédé conforme à l'invention permet de gérer un changement de voie dans des conditions non optimales, notamment lorsque ce changement de voie est imposé ou lorsqu'il est estimé comme étant la meilleure option (par exemple parce que continuer sur la voie courante conduirait à une collision avec un véhicule ou un obstacle).

La présente invention propose une méthode pour introduire une gestion active du risque arrière lorsque celui-ci a pour origine le comportement du véhicule hôte (dans le cas d'une insertion devant un autre véhicule). En conditions normales d'assistance à la conduite (ou de conduite autonome), la responsabilité du véhicule automatisé est engagée seulement vis-à-vis d'une collision avec le véhicule qui le précède (ou plus généralement un obstacle frontal). Ainsi, il est de la responsabilité d'un véhicule suiveur d'adapter son allure et de respecter les règles de sécurité pour ne pas conduire à une collision sur l'arrière du véhicule hôte.

Compte tenu de cette répartition des responsabilités ainsi que des conséquences plus importantes d'un risque avant pour le véhicule hôte (coût plus important des dégâts matériels dû notamment à la présence du moteur, importance des dommages aux personnes, notamment en raison du risque de projection vers l'avant, etc.), et à l'exception de certains cas particuliers (insertion et freinage intempestif, notamment), il n'est généralement pas tenu compte du véhicule arrière dans la gestion de l'allure du véhicule hôte, puisqu'il ne saurait être question d'accepter un risque de collision frontale supplémentaire, même en cas de « pression » d'un véhicule suiveur.

En revanche, dans les cas très précis où c'est le comportement même du véhicule hôte qui induit un risque de collision pour le véhicule arrière, il apparait opportun, et même nécessaire, de gérer ce risque dont le véhicule hôte assume pour partie la responsabilité. Ainsi, dans le cadre d'une insertion, une façon simple de gérer ce risque arrière est de ne pas autoriser la manoeuvre ou l'assistance à la manoeuvre lorsqu'un véhicule est détecté à l'arrière sur la voie cible. Cependant, certaines situations impliquent également un risque -voire une certitude- de collision en l'absence de manoeuvre. L'enjeu est alors de trouver un protocole permettant de gérer un « risque minimum » global, dégageant de ce fait une possibilité d'insertion, tout en continuant à privilégier le risque de collision frontal, problématique résolue par la présente invention.

Dans une réalisation, le risque de collision avec le véhicule arrière est estimé en fonction de l'une ou plusieurs des variables suivantes :
- le temps intervéhiculaire ;
- la distance intervéhiculaire ;
- le temps estimé avant collision.

Dans une réalisation, l'écart entre le véhicule avant et le véhicule arrière n'est pas suffisant pour une insertion du véhicule hôte dans des conditions nominales si une ou plusieurs des conditions suivantes est vérifiée :
- la distance entre le véhicule avant et le véhicule arrière sur la voie cible est inférieure à la somme de l'écart minimum de sécurité vis-à-vis du véhicule avant, de l'écart minimum de sécurité vis-à-vis du véhicule arrière et de la longueur du véhicule hôte ;
- l'évolution de la distance entre le véhicule avant et le véhicule arrière, telle qu'estimée par le système de conduite automatisé, notamment en fonction de la vitesse et de l'accélération du véhicule avant et du véhicule arrière, tend vers une valeur inférieure à la somme de l'écart minimum de sécurité vis-à-vis du véhicule avant, de l'écart minimum de sécurité vis-à-vis du véhicule arrière et de la longueur du véhicule hôte ;
- la prédiction des positions relatives dans le temps des véhicules avant et arrière ne permet pas au véhicule hôte de s'insérer entre eux tout en respectant l'écart minimum de sécurité vis-à-vis du véhicule avant, l'insertion du véhicule hôte conduisant alors à un risque inacceptable de collision arrière, se traduisant par exemple par une valeur du temps estimé avant collision avec le véhicule arrière inférieur ou égale à un seuil bas à un instant de la phase d'insertion.

Dans une réalisation, l'écart minimum de sécurité est déterminé en fonction d'une ou plusieurs des variables suivantes :
- le temps intervéhiculaire ;
- la distance intervéhiculaire ;
- le temps estimé avant collision.

Dans une réalisation, l'écart minimum de sécurité entre le véhicule avant et le véhicule hôte est déterminé notamment en fonction du temps intervéhiculaire.

Dans une réalisation, la valeur basse de l'écart minimum de sécurité entre le véhicule avant le véhicule hôte est comprise entre 0,8 et 1,5 secondes, et par exemple égale à 1 seconde.

Dans une réalisation, la manoeuvre de changement de voie est initiée si le risque de collision lors de l'insertion du véhicule hôte est moins élevé que le risque de collision en cas de maintien dans la voie courante, par exemple dans l'une des circonstances suivantes :
- un obstacle, notamment un obstacle immobile, est détecté en avant du véhicule hôte ;
- la voie sur laquelle circule le véhicule hôte se termine en avant du véhicule hôte, par exemple en cas de fusion de deux voies adjacentes.

L'invention concerne également un système de conduite automatisé comportant un calculateur, des capteurs et des actionneurs agencés pour mettre en oeuvre le procédé de gestion de changement de voie conforme à l'une des revendications précédentes.

L'invention concerne également un véhicule automobile équipé d'un système de conduite automatisé conforme à la revendication précédente.

La présente invention sera mieux comprise à la lecture de la description détaillée qui suit, faite en référence au dessins annexés, dans lesquels :
- la figure 1 représente un véhicule équipé d'un système de conduite automatisé permettant la mise en oeuvre d'un procédé conforme à l'invention ;
- les figures 2a, 2b et 2c représentent des exemples de situations de conduite dans lesquelles le procédé conforme à l'invention est mis en oeuvre.

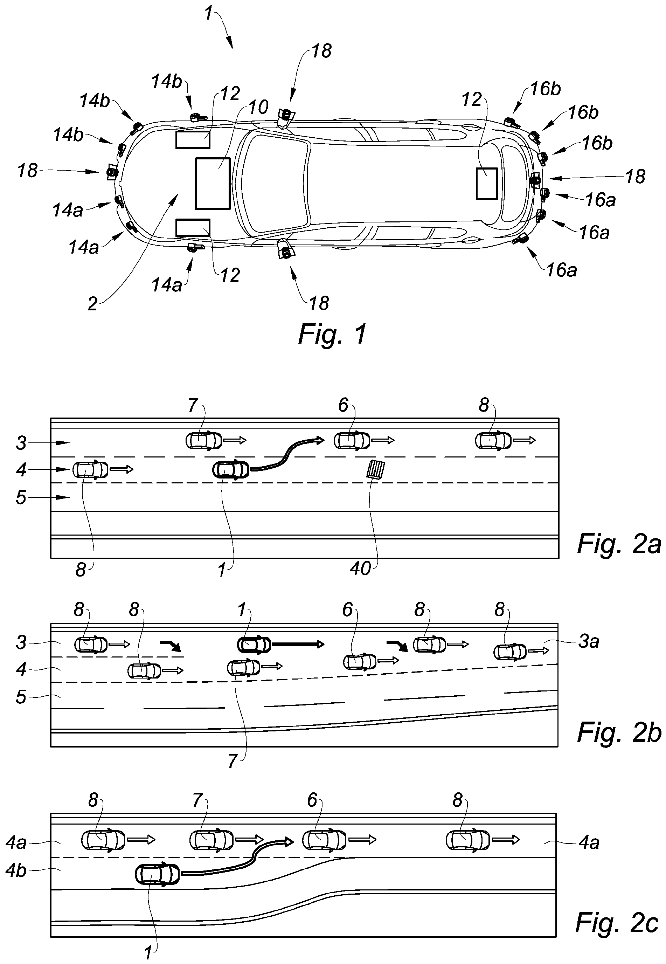

La figure 1 représente un véhicule partiellement ou totalement autonome, qui est équipé d'un système de conduite automatisé 2. Dans la suite de la présente description ce véhicule sera dénommé véhicule hôte 1. Le système de conduite automatisé 2 comporte notamment un calculateur 10, des actionneurs 12, ainsi qu'une pluralité de détecteurs, dans l'exemple une pluralité de capteurs 14a, 14b, 16a, 16b, 18 répartis sur l'avant, l'arrière et les côtés du véhicule hôte 1. Ces capteurs peuvent inclure un ou plusieurs des types de capteurs suivants : capteurs à ultrasons, radars, lidars, caméras à vision de jour, caméras à vision de nuit, etc. Le système de conduite automatisé 2 comporte dans l'exemple quatre caméras 18 (soit une caméra avant, une caméra arrière et deux caméras latérales) et une pluralité de capteurs 14a, 14b, 16a, 16b de type capteur à ultrasons et/ou radar et/ou lidar. Dans l'exemple, les caméras avant et arrière sont logées respectivement dans les pare-chocs avant et arrière, les caméras latérales étant logées dans les rétroviseurs extérieurs. Le calculateur 10 reçoit les données fournies par l'ensemble des capteurs 14a, 14b, 16a, 16b et par l'ensemble des caméras 18. Grâce à l'ensembles de ces capteurs, le calculateur 10 est apte à détecter la présence d'obstacles dans l'environnement du véhicule, et en particulier la présence de véhicules dans cet environnement, que ce soit sur la voie courante du véhicule hôte 1 ou sur les voies adjacentes.

Le calculateur 10 est par ailleur relié à une pluralité d'actionneurs 12, qui comportent des dispositifs aptes à agir notamment sur la direction, l'accélérateur et le système de freinage du véhicule hôte, afin d'en contrôler l'allure et la trajectoire.

On décrit ci-après la mise en oeuvre du procédé de gestion de changement de voie conforme à l'invention, en relation avec les situations de conduite illustrées sur les figures 2a, 2b et 2c.

Sur la figure 2a, le véhicule hôte 1 circule sur une route à plusieurs voies, la route comportant dans l'exemple une voie de gauche 3, une voie intermédiaire 4 et une voie de droite 5. Dans la situation illustrée sur la figure 2a, le véhicule 1 circule sur la voie intermédiaire 4 lorsqu'un obstacle immobile 40 est détecté par les capteurs du système de conduite automatisé 2, en avant du véhicule hôte 1. Suite à la détection de cet obstacle immobile 40, le système de conduite automatisé 2 détermine qu'une manoeuvre de changement de voie, malgré la proximité des véhicules 6 et 7, est la meilleure option pour éviter une collision, notamment avec l'obstacle immobile 40. Sur la voie cible, qui est dans l'exemple la voie de gauche 3, circulent à proximité du véhicule hôte 1 un véhicule avant 6 et un véhicule arrière 7, qui sont identifiés par le système de conduite automatisé 2 comme étant les deux véhicules entre lesquels le véhicule 1 va devoir s'insérer lors du changement de voie.

Afin d'initier la manoeuvre de changement de voie, le système de conduite automatisé 2 détermine si l'écart entre le véhicule avant 6 et le véhicule arrière 7 est suffisant pour une insertion du véhicule hôte 1 entre ces deux véhicules dans des conditions nominales. Ces conditions nominales incluent notamment la possibilité de respecter, lors de l'insertion, une consigne d'écart minimum de sécurité, aussi bien vis-à-vis du véhicule avant 6 que vis-à-vis du véhicule arrière 7.

L'écart minimum de sécurité entre deux véhicules peut être représenté par différents paramètres, et notamment l'un des paramètres suivants :
- le temps inter-véhiculaire, c'est-à-dire la durée de temps, mesurée en un point fixe de la voie de circulation, séparant le passage de deux véhicules successifs sur une même voie de circulation, ce paramètre est souvent désigné par l'acronyme TIV ;
- la distance inter-véhiculaire, c'est-à-dire la distance séparant deux véhicules successifs sur une même voie de circulation ;
- le temps avant collision, c'est-à-dire le temps restant avant collision si deux véhicules successifs sur la même voie conservent chacun leur vitesse respective.

Le système de conduite automatisé peut par exemple déterminer les écarts entre véhicules en utilisant le paramètre du temps inter-véhiculaire.

Avant de procéder au changement de voie, le système va donc déterminer si l'écart entre le véhicule avant 6 et le véhicule arrière 7 est suffisant, compte tenu notamment de longueur du véhicule hôte 1. Ainsi, si la distance entre le véhicule avant 6 et le véhicule arrière 7 ne correspond pas à au moins deux fois la valeur nominale de consigne de l'écart minimum de sécurité augmentée de la longueur du véhicule hôte, le système de conduite automatisé 2 détermine que la distance entre le véhicule avant 6 et le véhicule arrière 7 n'est pas suffisante pour une insertion du véhicule hôte 1 dans les conditions nominales.

Toutefois, comme mentionné plus haut, la présence de l'obstacle immobile 40 impose le changement de voie. Dans ces conditions, conformément à l'invention, si le risque de collision vis-à-vis du véhicule arrière 7 apparait significativement plus élevé que le risque de collision vis-à-vis du véhicule avant 6, alors le système de conduite automatisé abaisse provisoirement la valeur de consigne de l'écart minimum de sécurité vis-à-vis du véhicule avant 6, d'une valeur nominale à une valeur basse. Le risque de collision sera estimé comme significativement plus élevé si par exemple le temps avant collision est inférieur à 1 seconde, ou si par exemple le temps inter-véhiculaire est inférieur à 1 seconde. Si les écarts entre véhicule sont exprimés en temps inter-véhiculaire, on pourra par exemple abaisser la valeur de consigne d'une valeur nominale de 2 secondes à une valeur basse de 1 seconde.

Par provisoirement, on entend une durée déterminée de manière à laisser le temps au véhicule hôte de s'insérer dans le trafic de la voie cible, ici la voie de gauche 3, et d'augmenter progressivement la distance entre le véhicule avant 6 et le véhicule hôte 1, jusqu'à ce que cette distance redevienne au moins égale à celle correspondant à la valeur nominale de consigne. Ainsi, après insertion du véhicule hôte sur la voie cible, le système de conduite automatisé augmente progressivement la valeur de consigne de l'écart minimum de sécurité vis-à-vis du véhicule avant 6. Si le véhicule avant 6 roule à vitesse constante, cette augmentation progressive va conduire à une légère décélération du véhicule hôte, jusqu'à ce que l'écart de sécurité minimum soit revenu à une valeur normale.

Les figures 2b et 2c représentent deux exemples de situation dans lesquels le procédé conforme à l'invention peut être mise en oeuvre afin de gérer un changement de voie contraint.

Sur la figure 2b, on a représenté une route à plusieurs voies de circulation, une voie de gauche 3, une voie intermédiaire 4 et une voie de droite 5. Dans l'exemple de la figure 2b la voie de gauche 3 et la voie intermédiaire 4 fusionnent via un biseau de raccordement, à l'issue duquel il ne subsiste qu'une seule voie commune 3a en plus de la voie de droite 5. Dans l'exemple de la figure 2b, on voit que le véhicule hôte se maintient sur sa voie mais doit néanmoins s'insérer entre le véhicule avant 6 et le véhicule arrière 7 lors de la fusion des voies de gauche 3 et intermédiaire 4 (puisque le véhicule hôte 1 n'est pas prioritaire, sa voie étant la voie interrompue par le biseau de raccordement, comme le montre les flèches de rabattement). Dans cette situation, le procédé de gestion de changement de voie conforme à l'invention est mis en oeuvre de manière analogue à celle décrite en relation avec la figure 2a, le système de conduite automatisé 2 détectant la fusion des voies.

Sur la figure 2c, on a représenté le véhicule hôte 1 circulant sur une voie d'accélération 4b, la voie d'accélération 4b permettant l'entrée sur une voie rapide 4a. Dans cette situation, le système de conduite automatisé 2 détecte que la voie courante du véhicule hôte se termine en avant du véhicule et met en oeuvre le procédé conforme à l'invention pour procéder à l'insertion du véhicule hôte 1 dans le trafic de la voie rapide 4a, et plus particulièrement entre le véhicule avant 6 et le véhicule arrière 7.

## Revendications

1. Procédé de gestion d'un changement de voie d'un véhicule équipé d'un système de conduite automatisé (2), ci-après véhicule hôte (1) le procédé comportant les étapes suivantes :
- déterminer si l'écart entre un premier véhicule, ou véhicule avant (6), circulant sur une voie adjacente, dite voie cible (3), et un deuxième véhicule, ou véhicule arrière (7), circulant sur la voie cible, est suffisant pour une insertion du véhicule hôte (1) dans des conditions nominales ;
- si l'écart entre le véhicule avant (6) et le véhicule arrière (7) n'est pas suffisant pour une insertion du véhicule hôte (1) dans des conditions nominales, et si le risque de collision avec le véhicule arrière (7) est estimé comme significativement plus élevé que le risque de collision avec le véhicule avant (6), procéder au changement de voie du véhicule hôte (1) vers la voie cible, en abaissant provisoirement une valeur de consigne d'un écart minimum de sécurité vis-à-vis du véhicule avant (6) d'une valeur nominale à une valeur basse ;
- lorsque le véhicule hôte (1) est sur la voie cible et inséré entre le véhicule avant (6) et le véhicule arrière (7), augmenter progressivement la valeur de consigne de l'écart minimum de sécurité vis-à-vis du véhicule avant (6) jusqu'à sa valeur nominale.

2. Procédé de gestion d'un changement de voie selon la revendication précédente, dans lequel le risque de collision avec le véhicule arrière (7) est estimé en fonction de l'une ou plusieurs des variables suivantes :
- un temps intervéhiculaire ;
- une distance intervéhiculaire ;
- un temps estimé avant collision.

3. Procédé selon l'une des revendications précédentes, dans lequel l'écart entre le véhicule avant (6) et le véhicule arrière (7) n'est pas suffisant pour une insertion du véhicule hôte (1) dans des conditions nominales si une ou plusieurs des conditions suivantes est vérifiée :
- la distance entre le véhicule avant (6) et le véhicule arrière (7) dans la voie cible (3) est inférieure à la somme de l'écart minimum de sécurité vis-à-vis du véhicule avant (6), d'un écart minimum de sécurité vis-à-vis du véhicule arrière (7) et de la longueur du véhicule hôte (1) ;
- l'évolution de la distance entre le véhicule avant (6) et le véhicule arrière (7), telle qu'estimée par le système de conduite automatisé, notamment en fonction de la vitesse et de l'accélération du véhicule avant (6) et du véhicule arrière (7), tend vers une valeur inférieure à la somme de l'écart minimum de sécurité vis-à-vis du véhicule avant (6), de l'écart minimum de sécurité vis-à-vis du véhicule arrière (7) et de la longueur du véhicule hôte (1).

4. Procédé de gestion de changement de voie selon l'une des revendications précédentes, dans lequel l'écart minimum de sécurité vis-à-vis du véhicule avant (6) et/ou vis-à-vis du véhicule arrière (7) est déterminé en fonction d'une ou plusieurs des variables suivantes :
- un temps intervéhiculaire ;
- une distance intervéhiculaire ;
- un temps estimé avant collision.

5. Procédé de gestion de changement de voie selon la revendication précédente, dans lequel l'écart minimum de sécurité entre le véhicule avant (6) et le véhicule hôte (1) est déterminé en fonction du temps intervéhiculaire.

6. Procédé de gestion de changement de voie selon la revendication précédente, dans lequel la valeur basse de l'écart minimum de sécurité entre le véhicule avant (6) le véhicule hôte (1) est comprise entre 0,8 et 1,5 secondes, et par exemple égale à 1 seconde.

7. Procédé selon l'une des revendications 5 à 7, dans lequel l'écart minimum de sécurité entre le véhicule hôte (1) et le véhicule arrière (7) est déterminé en fonction du temps estimé avant collision.

8. Procédé de gestion d'un changement de voie selon l'une des revendications précédentes, dans lequel la manoeuvre de changement de voie est initiée si le risque de collision lors de l'insertion du véhicule hôte est moins élevé que le risque de collision en cas de maintien dans la voie courante, par exemple dans l'une des circonstances suivantes :
- un obstacle, notamment un obstacle immobile, est détecté en avant du véhicule hôte (1) ;
- la voie (4) sur laquelle circule le véhicule hôte (1) se termine en avant du véhicule hôte (1), par exemple en cas de fusion de deux voies adjacentes.

9. Système de conduite automatisé (2) comportant un calculateur (10), des capteurs (14a, 14b, 16a, 16b, 18) et des actionneurs (12) agencés pour mettre en oeuvre le procédé de gestion de changement de voie conforme à l'une des revendications précédentes..

10. Véhicule automobile (1) équipé d'un système de conduite automatisé (2) conforme à la revendication précédente.

## Patentansprüche

1. Verfahren zur Bewältigung eines Spurwechsels eines mit einem automatisierten Fahrsystem (2) ausgestatteten Fahrzeugs, im Folgenden Hostfahrzeug (1), umfassend die folgenden Schritte:
- Bestimmen, ob die Lücke zwischen einem ersten Fahrzeug oder vorderen Fahrzeug (6), das auf einer angrenzenden Spur fährt, die als Zielspur (3) bezeichnet wird, und einem zweiten Fahrzeug oder hinteren Fahrzeug (7), das auf der Zielspur fährt, beträgt ausreichend für das Einsetzen des Trägerfahrzeugs (1) unter Nennbedingungen;
- wenn der Abstand zwischen dem vorderen Fahrzeug (6) und dem hinteren Fahrzeug (7) unter Nennbedingungen für das Einfahren des eigenen Fahrzeugs (1) nicht ausreicht und die Gefahr einer Kollision mit dem hinteren Fahrzeug (7) zu gering eingeschätzt wird deutlich höher sein als das Risiko einer Kollision mit dem vorausfahrenden Fahrzeug (6), wobei ein Spurwechsel des eigenen Fahrzeugs (1) in Richtung der Zielspur durch vorübergehendes Absenken eines eingestellten Wertes um eine minimale Sicherheitsabweichung gegenüber dem Zielfahrzeug vorgenommen wird vorderes Fahrzeug (6) von einem Nominalwert auf einen niedrigen Wert;
- Wenn sich das eigene Fahrzeug (1) auf der Zielspur befindet und zwischen dem vorderen Fahrzeug (6) und dem hinteren Fahrzeug (7) eingefügt ist, wird der Sollwert des Mindestsicherheitsabstands vom vorderen Fahrzeug (6) schrittweise auf seinen Nennwert erhöht Wert.

2. Verfahren zur Bewältigung eines Spurwechsels nach dem vorhergehenden Anspruch, bei dem die Gefahr einer Kollision mit dem hinteren Fahrzeug (7) in Abhängigkeit von einer oder mehreren der folgenden Größen abgeschätzt wird:
- eine Zwischenfahrzeugzeit;
- ein Fahrzeugabstand;
- eine geschätzte Zeit bis zur Kollision.

3. Verfahren nach einem der vorhergehenden Ansprüche, bei dem der Abstand zwischen dem vorderen Fahrzeug (6) und dem hinteren Fahrzeug (7) unter Nennbedingungen nicht zum Einfahren des Trägerfahrzeugs (1) ausreicht, wenn ein oder mehrere der Folgende Bedingungen gelten:
- der Abstand zwischen dem vorderen Fahrzeug (6) und dem hinteren Fahrzeug (7) auf der Zielspur (3) geringer ist als die Summe aus dem Mindestsicherheitsabstand zum Vorderfahrzeug (6), einem Mindestsicherheitsabstand zum Hinterfahrzeug (7) und die Länge des Trägerfahrzeugs (1);
- die Entwicklung des Abstands zwischen dem vorderen Fahrzeug (6) und dem hinteren Fahrzeug (7), wie vom automatisierten Fahrsystem geschätzt, insbesondere in Abhängigkeit von der Geschwindigkeit und der Beschleunigung des vorderen Fahrzeugs (6) und des hinteren Fahrzeugs (7) tendiert zu einem Wert kleiner als die Summe aus dem Mindestsicherheitsabstand zum Vorderfahrzeug (6), dem Mindestsicherheitsabstand zum Hinterfahrzeug (7) und der Länge des eigenen Fahrzeugs (1).

4. Spurwechselmanagementverfahren nach einem der vorhergehenden Ansprüche, bei dem der minimale Sicherheitsabstand gegenüber dem vorderen Fahrzeug (6) und/oder gegenüber dem hinteren Fahrzeug (7) anhand von eins ermittelt wird oder mehrere der folgenden Variablen:
- eine Zwischenfahrzeugzeit;
- ein Fahrzeugabstand;
- eine geschätzte Zeit bis zur Kollision.

5. Spurwechselmanagementverfahren nach dem vorhergehenden Anspruch, bei dem der minimale Sicherheitsabstand zwischen dem Vorderfahrzeug (6) und dem eigenen Fahrzeug (1) in Abhängigkeit von der Fahrzeugzwischenzeit ermittelt wird.

6. Spurwechselmanagementverfahren nach dem vorhergehenden Anspruch, bei dem der untere Wert des minimalen Sicherheitsabstands zwischen dem Vorderfahrzeug (6) und dem eigenen Fahrzeug (1) zwischen 0,8 und 1,5 Sekunden beträgt und beispielsweise gleich 1 ist zweite.

7. Verfahren nach einem der Ansprüche 5 bis 7, bei dem der minimale Sicherheitsabstand zwischen dem eigenen Fahrzeug (1) und dem hinteren Fahrzeug (7) in Abhängigkeit von der geschätzten Zeit bis zur Kollision ermittelt wird.

8. Verfahren zur Bewältigung eines Spurwechsels nach einem der vorhergehenden Ansprüche, bei dem das Spurwechselmanöver eingeleitet wird, wenn die Kollisionsgefahr beim Einfahren des eigenen Fahrzeugs geringer ist als die Kollisionsgefahr beim Verbleib in der Spur aktuelle Spur, zum Beispiel in einem der folgenden Fälle:
- vor dem eigenen Fahrzeug (1) wird ein Hindernis, insbesondere ein stehendes Hindernis, erkannt;
- die Fahrspur (4), auf der das eigene Fahrzeug (1) fährt, endet vor dem eigenen Fahrzeug (1), beispielsweise bei einer Zusammenführung zweier benachbarter Fahrspuren.

9. Automatisiertes Fahrsystem (2), umfassend einen Computer (10), Sensoren (14a, 14b, 16a, 16b, 18) und Aktoren (12), die dazu eingerichtet sind, das Spurwechselmanagementverfahren nach einem der vorhergehenden Ansprüche umzusetzen.

10. Kraftfahrzeug (1), ausgestattet mit einem automatisierten Fahrsystem (2) nach dem vorhergehenden Anspruch.

## Claims

1. Method for managing a lane change of a vehicle equipped with an automated driving system (2), hereinafter host vehicle (1), the method comprising the following steps:
- determining whether the gap between a first vehicle, or front vehicle (6), traveling on an adjacent lane, called the target lane (3), and a second vehicle, or rear vehicle (7), traveling on the target lane, is sufficient for insertion of the host vehicle (1) under nominal conditions;
- if the gap between the front vehicle (6) and the rear vehicle (7) is not sufficient for insertion of the host vehicle (1) under nominal conditions, and if the risk of collision with the rear vehicle (7) is estimated to be significantly higher than the risk of collision with the vehicle in front (6), changing lanes from the host vehicle (1) to the target lane, by temporarily lowering a set value by a minimum safety gap vis-à-vis the front vehicle (6) from a nominal value to a low value;
- when the host vehicle (1) is on the target lane and inserted between the front vehicle (6) and the rear vehicle (7), gradually increasing the set value of the minimum safety gap with respect to the front vehicle (6) up to its nominal value.

2. Method for managing a lane change according to the preceding claim, in which the risk of collision with the rear vehicle (7) is estimated as a function of one or more of the following variables:
- an intervehicular time;
- an intervehicular distance;
- an estimated time before collision.

3. Method according to one of the preceding claims, in which the distance between the front vehicle (6) and the rear vehicle (7) is not sufficient for insertion of the host vehicle (1) under nominal conditions if one or more of the following conditions is verified:
- the distance between the front vehicle (6) and the rear vehicle (7) in the target lane (3) is less than the sum of the minimum safety distance from the front vehicle (6), by one minimum safe distance from the rear vehicle (7) and the length of the host vehicle (1) ;
- the evolution of the distance between the front vehicle (6) and the rear vehicle (7), as estimated by the automated driving system, in particular according to the speed and the acceleration of the front vehicle (6) and of the rear vehicle (7), tends towards a value less than the sum of the minimum safety distance from the front vehicle (6), the minimum safety distance from the rear vehicle ( 7) and the length of the host vehicle (1).

4. Method for managing a change of lane according to one of the preceding claims, in which the minimum safety distance vis-à-vis the front vehicle (6) and/or vis-à-vis the rear vehicle (7) is determined depending on one or more of the following variables:
- an intervehicular time;
- an intervehicular distance;
- an estimated time before collision.

5. Lane change management method according to the preceding claim, in which the minimum safety gap between the front vehicle (6) and the host vehicle (1) is determined as a function of the intervehicular time.

6. Lane change management method according to the preceding claim, in which the low value of the minimum safety gap between the front vehicle (6) and the host vehicle (1) is between 0.8 and 1.5 seconds, and for example equal to 1 second.

7. Method according to one of Claims 5 to 7, in which the minimum safety gap between the host vehicle (1) and the rear vehicle (7) is determined as a function of the estimated time before collision.

8. Method for managing a lane change according to one of the preceding claims, in which the lane change maneuver is initiated if the risk of collision during the insertion of the host vehicle is lower than the risk of collision in the event of keeping in the current lane, for example in one of the following circumstances:
- an obstacle, in particular a stationary obstacle, is detected in front of the host vehicle (1);
- the lane (4) on which the host vehicle (1) travels ends in front of the host vehicle (1), for example in the event of a merger of two adjacent lanes .

9. Automated driving system (2) comprising a computer (10), sensors (14a, 14b, 16a, 16b, 18) and actuators (12) arranged to implement the lane change management method in accordance with one of the preceding claims.

10. Motor vehicle (1) fitted with an automated driving system (2) in accordance with the preceding claim.
